# EUROPEAN PATENT SPECIFICATION

(11) **EP 3 044 038 B1**
(45) Date of publication and mention of the grant of the patent: **09.05.2018**
(21) Application number: 14772537.8
(22) Date of filing: 11.09.2014
(51) Int. Cl.: B60R 7/04

(54) **VEHICLE CONSOLE HAVING A TRACK FOR MOVING A TAMBOUR DOOR BETWEEN MULTIPLE POSITIONS**
FAHRZEUGKONSOLE MIT EINER SPUR ZUM BEWEGEN EINER ROLLTÜR ZWISCHEN MEHREREN POSITIONEN
CONSOLE DE VÉHICULE POSSÉDANT UNE GLISSIÈRE SERVANT À DÉPLACER UNE PORTE COULISSANTE ENTRE PLUSIEURS POSITIONS

(30) Priority: 13.09.2013 US 201361877683 P
(43) Date of publication of application: 20.07.2016
(73) Proprietor: Johnson Controls Technology Company, Milwaukee, WI 53209 (US); Vanhoof, Randal John, Zeeland, Michigan 49464 (US)
(72) Inventor: VANHOOF, Randal John, Zeeland, Michigan 49464 (US); HIPSHIER, Jason M., Hudsonville, Michigan 49426 (US); LARSEN, Danny Brian, Holland, Michigan 49424 (US); NEWKIRK, Tyler James, Grand Rapids, Michigan 49503 (US)
(74) Representative: Trinks, Ole
(86) International application number: PCT/US2014/055221
(87) International publication number: WO 2015/038791

(56) References cited:
- WO-A1-2013/053348
- DE-A1-102006 013 969
- DE-A1-102009 030 350
- US-A1- 2012 074 726

## Description

### CROSS REFERENCE TO RELATED APPLICATION

This application claims priority from and the benefit of U.S. Provisional Patent Application Serial No. 61/877,683, entitled "VEHICLE CONSOLE HAVING A TRACK FOR MOVING A TAMBOUR DOOR BETWEEN MULTIPLE POSITIONS", filed September 13, 2013.

### BACKGROUND

The invention relates generally to a vehicle console having a track for moving a tambour door between multiple positions.

Vehicles may include storage compartments positioned throughout the vehicle interior. For example, an overhead console may include a storage compartment suitable for storing sunglasses, driving glasses, or other items. Other storage compartments may be located within a center console, an armrest, seats, door panels, or other areas of the vehicle interior. Certain storage compartments include a door configured to secure the contents of the compartment and/or to hide the contents from view. For example, it may be desirable to position a storage compartment within a floor console beneath an armrest, and utilize the armrest, or a door within the armrest (e.g., a tambour door), to facilitate access to the storage compartment. Unfortunately, limited movement of the door in relation to the storage compartment may inhibit diverse uses of the storage compartment. Document DE10 2009 030 350 A1 relates to a vehicle console comprising a support structure, one single track with several sections in the shape of an oval to support the structure and a tambour door slidingly supported by the track and to be slid through the different sections of the track.

### BRIEF DESCRIPTION OF THE INVENTION

The present invention relates to a vehicle console according to claim 1, having a support structure and a track extending along the support structure. The vehicle console also includes a tambour door slidingly supported by the track. The track includes a first track section, a second track section, and a third track section. Moreover, the first, second, and third track sections extend from a single junction. The tambour door is configured to slide within the first, second, and third track sections.

The present invention further relates to a vehicle console according to claim 10, including a support structure having a storage area. The vehicle console also includes a track extending along the support structure. The track includes a first track section, a second track section, and a third track section. The first track section, the second track section, and the third track section are joined to one another by a pair of junctions. The vehicle console also includes a tambour door slidingly supported by the track. The first track section is configured to position the tambour door in a storage location within the support structure, the second track section is configured to position the tambour door above a first region of the storage area to block access to the first region, the third track section is configured to position the tambour door within a second region of the storage area to divide the second region into a first sub-region and a second sub-region, and the tambour door is configured to slide within the first, second, and third track sections.

### DRAWINGS

FIGS. 1A and 1B are perspective views of an exemplary vehicle that may include a console having a track with multiple track sections for moving a tambour door between multiple positions.
FIG. 2 is a perspective view of an embodiment of a console having a track with multiple track sections for moving a tambour door between multiple positions.
FIG. 3 is a cross-sectional view of the console of FIG. 2.
FIG. 4 is a cross-sectional view of the console of FIG. 2 showing individual track sections of a track.
FIG. 5 is a cross-sectional view of an embodiment of a console having a track with multiple track sections for moving a tambour door between multiple positions.
FIG. 6 is a cross-sectional view of another embodiment of a console having a track with multiple track sections for moving a tambour door between multiple positions.
FIG. 7 is a cross-sectional view of a further embodiment of a console having a track with multiple track sections for moving a tambour door between multiple positions.
FIG. 8 is a cross-sectional view of yet another embodiment of a console having a track with multiple track sections for moving a tambour door between multiple positions.
FIG. 9 is a perspective view of the console of FIG. 8.

### DETAILED DESCRIPTION

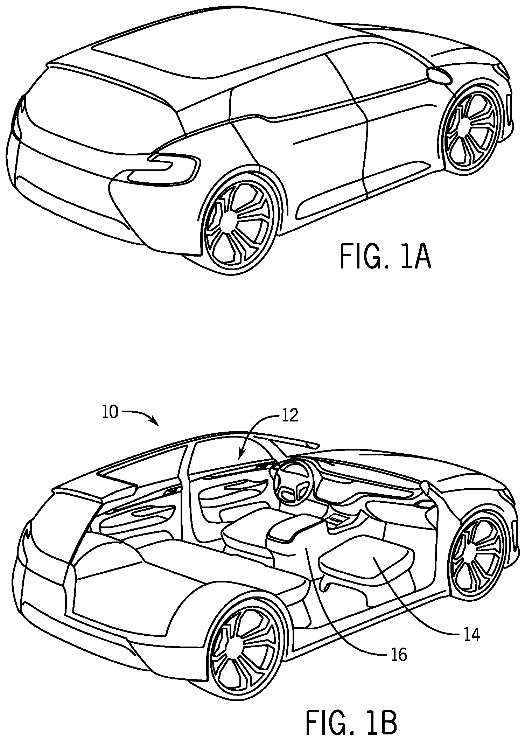

FIGS. 1A and 1B are perspective views of an exemplary vehicle that may include a console having a track with multiple track sections for moving a tambour door between multiple positions. As illustrated, the vehicle 10 includes an interior 12 having a seat 14 and a console 16 (e.g., floor console). As discussed in detail below, the console 16 may include a tambour door configured to facilitate access to a storage compartment within the floor console. The tambour door may be slidingly coupled to a track having multiple track sections that enable the tambour door to be positioned in different configurations. For example, in certain embodiments, the console 16 includes a support structure. A track extends along the support structure. In addition, the console 16 includes a tambour door slidingly supported by the track. Moreover, the track includes a first track section, a second track section, and a third track section. In certain embodiments, the first and third track sections extend substantially parallel to one another, and the second track section connects the first and third track sections together. In other embodiments, the first, second, and third track sections extend from a single junction. The tambour door is configured to slide within the first, second, and third track sections. Accordingly, the tambour door may be positioned in different configurations by being moved along the first, second, and third track sections. With such a configuration, the tambour door may slide within the track to enable the console 16 to house a flexible, deployable, stowable, consumer defined storage compartment. Such a storage compartment may be used to replace predefined storage compartments (e.g., storage compartments that include a molded tray or divider that may be positioned in a single location and may be physically removed from the storage compartment to enable a largest storage volume).

While the tambour door is described herein with reference to a console, it should be appreciated that the tambour door may be employed within other vehicle interior components. For example, a seat, a glove box, a door panel, and/or a rear seat assembly may include a tambour door coupled to a track having multiple track sections that enable the tambour door to be positioned in different configurations.

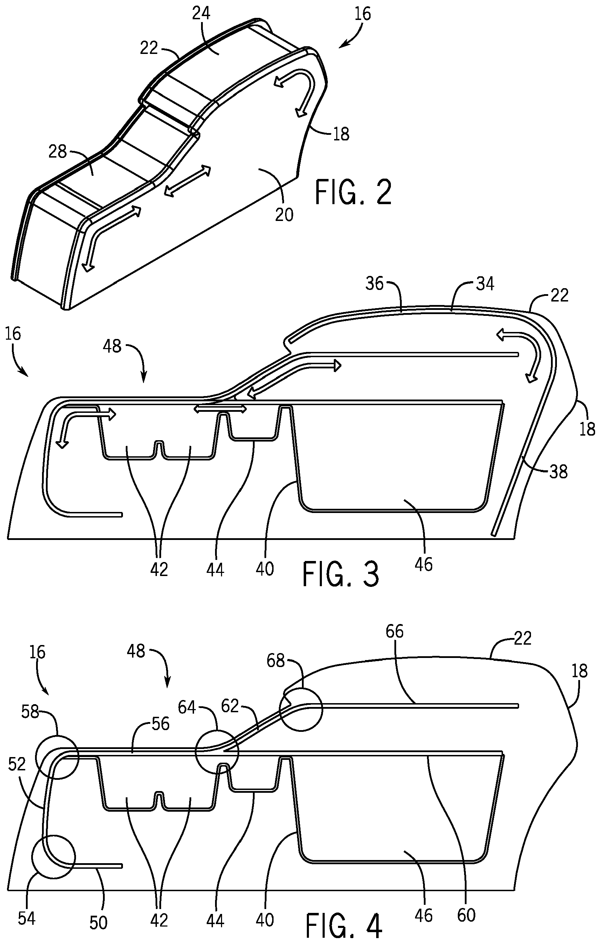

FIG. 2 is a perspective view of an embodiment of the console 16 having a track with multiple track sections for moving a tambour door between multiple positions. As illustrated, the console 16 includes a support structure 18. As discussed in detail below, the support structure 18 includes a storage compartment configured to retain various items, such as documents, glasses, and/or portable electronic devices, among other items. The support structure 18 includes a first wall 20 and a second wall 22 substantially parallel to one another.

In the illustrated embodiment, a first tambour door 24 is slidingly disposed in the support structure 18 and configured to slide between the illustrated closed position and an opened position as indicated by arrows 26. As will be appreciated, the closed position substantially blocks an opening to the storage compartment, and the open position facilitates access to the storage compartment. For example, a vehicle occupant may slide the first tambour door 24 rearwardly, access items within the storage compartment, and then slide the first tambour door 24 forwardly to close the storage compartment. A second tambour door 28 is also slidingly disposed in the support structure 18 and configured to slide between the illustrated position and additional positions. For example, the second tambour door 28 may slide toward a front portion of the support structure 18 as indicated by arrows 30. Furthermore, the second tambour door 28 may slide toward a rear portion of the support structure 18 as indicated by arrows 32. As discussed in detail below, the first and/or second tambour doors 24 and 28 slide along tracks. The tracks may include multiple track sections to facilitate moving the first and/or second tambour doors 24 and 28 to various positions.

FIG. 3 is a cross-sectional view of the console 16 of FIG. 2. As illustrated, a track 34 is coupled to and extends along the second wall 22 of the support structure 18. As may be appreciated, the first tambour door 24 is slidingly disposed in and supported by the track 34. The track 34 includes a first track section 36 that extends substantially in a horizontal plane and a second track section 38 that extends substantially in a vertical plane. While the first tambour door 24 is in the closed position, the first tambour door 24 is primarily positioned within the first track section 36. In contrast, while the first tambour door 24 is in the opened position, the first tambour door 24 is primarily positioned within the second track section 38. Accordingly, the first and second track sections 36 and 38 facilitate movement of the first tambour door 24 between the closed position and the opened position.

The support structure 18 includes an assembly 40 that divides an interior (e.g., storage area) of the support structure 18 into various storage compartments 42, 44, and 46. Specifically, in certain embodiments, the storage compartment 42 may be used as a cup holder, the storage compartment 44 may be used to store small items, and the storage compartment 46 may be used to store large items. A track 48 is also coupled to and extends along the second wall 22 of the support structure 18. The track 48 includes multiple track sections for guiding the second tambour door 28 around the storage compartments 42, 44, and 46, and for slidingly supporting the second tambour door 28. Using the track 48, the second tambour door 28 may move in any of the directions illustrated by arrows 30, 32, and 49. Accordingly, the second tambour door 28 may be used to cover one or more of the storage compartments 42, 44, and 46, and/or may operate as a shelf within the support structure 18.

FIG. 4 is a cross-sectional view of the console of FIG. 2 showing individual track sections of the track 48. Specifically, the track 48 includes a first track section 50 and a second track section 52 joined by a first junction 54. The first track section 50 extends in a substantially horizontal plane, while the second track section 52 extends in a substantially vertical plane. The first junction 54 is curved to facilitate joining the first and second track sections 50 and 52 together. The track 48 also includes a third track section 56 joined to the second track section 52 by a second junction 58. The second junction 58 is curved to facilitate joining the second and third track sections 52 and 56 together. The third track section 56 extends in a substantially horizontal plane. Furthermore, the first track section 50 and the third track section 56 extend substantially parallel to one another. As illustrated, the first, second, and third track sections 50, 52, and 56 together form a c-shape. As may be appreciated, in certain embodiments, the first, second, and third track sections 50, 52, and 56 may be arranged to form a u-shape or an n-shape.

The first and second track sections 50 and 52 are configured to position the tambour door in a storage location within the support structure 18. For example, in certain embodiments, the support structure 18 is configured to substantially conceal the tambour door (e.g., hide a substantial portion of the tambour door from view of the vehicle occupants) while the tambour door is in the storage location. In certain embodiments, the length of the tambour door may be less than or equal to the length of the second track section 52. In such embodiments, the first track section 50 may be omitted, and the second track section 52 may position the tambour door in the storage location. In addition, the third track section 56 is configured to position the tambour door above a first region of the interior/storage area (e.g., above the storage compartment 42) to block access to the first region. Accordingly, the tambour door may secure items within the first region/storage compartment 42 while the tambour door is positioned within the third track section 56. In addition, the tambour door may function as a tray (e.g., to support item disposed on top of the tambour door) while the tambour door is positioned within the third track section 56.

The track 48 also includes a fourth track section 60 and a fifth track section 62. The third, fourth, and fifth track sections 56, 60, and 62 are joined by a third junction 64. As illustrated, the third and fourth track sections 56 and 60 are aligned with one another. However, in other embodiments, the third and fourth track sections 56 and 60 may not be aligned with one another. As may be appreciated, the third, fourth, and fifth track sections 56, 60, and 62 form a Y-shape. In certain embodiments, the third, fourth, and fifth track sections 56, 60, and 62 form a T-shape, or any other suitable shape that enables the tambour door to transition between track sections. Furthermore, in the illustrated embodiment, the third junction 64 is a Y-junction. In other embodiments, the third junction 64 may be a T-junction, or any other suitable junction that enables the tambour door to transition between track sections.

As may be appreciated, with the second tambour door 28 slidingly supported by the track 48, the second tambour door 28 may slide between the third and fourth track sections 56 and 60 or between the third and fifth track sections 56 and 62. However, the third junction 64 blocks sliding of the second tambour door 28 between the fourth and fifth track sections 60 and 62. Moreover, in certain embodiments, the third junction 64 may be configured to enable the second tambour door 28 to slide between the fourth and fifth track sections 60 and 62.

As illustrated, the fourth track section 60 is configured to position the tambour door within a second region of the interior/storage area (e.g., within the storage compartment 46) to divide the second region into a first sub-region (e.g., a sub-region above the tambour door) and a second sub-region (e.g., a sub-region below the tambour door). While the tambour door is positioned within the fourth track section 60, the tambour door may secure items disposed within the second sub-region. The tambour door may also establish an open storage volume within the first sub-region, thereby providing an additional storage area within the console 16. In certain embodiments, the fifth track section 62 may be omitted, and the third junction 64 may be a two-way junction that only joins the third and fourth track sections 56 and 60. In such embodiments, the tambour door may transition between the storage location, a location above the first region of the storage area, and a location within the second region of the storage area to divide the second region into first and second sub-regions.

While the first and second track sections 50 and 52 are positioned forward of the third and fourth track sections 56 and 60 (e.g., relative to the primary direction of travel of the vehicle) in the illustrated embodiment, it should be appreciated that the first and second track sections 50 and 52 may be positioned aft of the third and fourth track sections 56 and 60 in alternative embodiments. In such embodiments, the first and second track sections 50 and 52 may be joined to the fourth track section 60, thereby positioning the storage location of the tambour door in a rear portion of the support structure 18. Similar to the illustrated embodiment, the rear portion of the support structure 18 may be configured to conceal the tambour door while the tambour door is in the storage location.

In the illustrated embodiment, the track 48 includes a sixth track section 66 joined to the fifth track section 62 by a fourth junction 68. As illustrated, the sixth track section 66 is substantially parallel to the first, third, and fourth track sections 50, 56, and 60. The fourth and sixth track sections 60 and 66 may be used to position the second tambour door 28 in a substantially horizontal position to function as a shelf of a storage compartment within the support structure 18. As discussed above, the second tambour door 28 is configured to slide throughout the track 48. Specifically, the second tambour door 28 is configured to slide within each of the first, second, third, fourth, fifth, and sixth track sections 50, 52, 56, 60, 62, and 66, and within each of the first, second, third, and fourth junctions 54, 58, 64, and 68. It should be noted that each of the first, second, third, fourth, fifth, and sixth track sections 50, 52, 56, 60, 62 are substantially straight. However, it should be appreciated that certain track sections (e.g., one or more of the first, second, third, fourth, fifth, and sixth track sections) may be curved in alternative embodiments. As may be appreciated, using the track 48, the second tambour door 28 may be positioned in a variety of different ways within the console 16 without removing the second tambour door 28 from the track 48. For example, the second tambour door 28 may be used to cover one or more of the storage compartments 42, 44, and 46, and/or may operate as a shelf within the support structure 18.

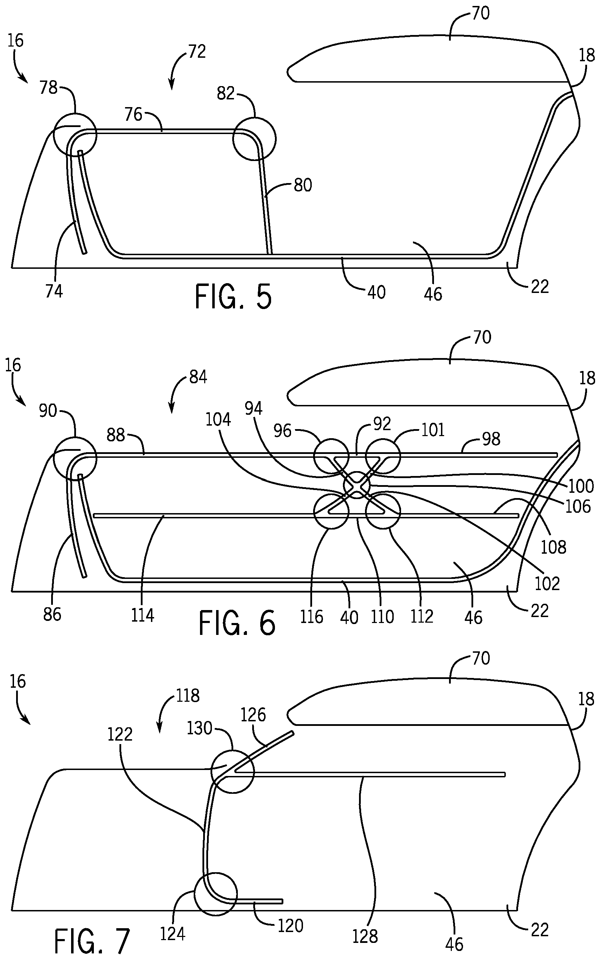

FIG. 5 is a cross-sectional view of an embodiment of the console 16 having a track with multiple track sections for moving a tambour door between multiple positions. As illustrated, the console 16 includes an armrest 70. In other embodiments, the console 16 may not include an armrest. Moreover, the console 16 includes a track 72 coupled to and extending along the second wall 22 of the support structure 18. The track 72 includes a first track section 74 and a second track section 76 joined by a first junction 78. The first track section 74 extends in a substantially vertical plane, while the second track section 76 extends in a substantially horizontal plane. The first junction 78 is curved to facilitate joining the first and second track sections 74 and 76 together. The track 72 also includes a third track section 80 joined to the second track section 76 by a second junction 82. The second junction 82 is curved to facilitate joining the second and third track sections 76 and 80 together. The third track section 80 extends in a substantially vertical plane (e.g., the third track section 80 is substantially perpendicular to the second track section 76). Furthermore, the first track section 74 and the third track section 80 extend substantially parallel to one another. As illustrated, the first, second, and third track sections 74, 76, and 80 together form an n-shape. As may be appreciated, in certain embodiments, the first, second, and third track sections 74, 76, and 80 may be arranged to form a u-shape or a c-shape.

A tambour door is configured to slide within the first, second, and third track sections 74, 76, and 80, and within the first and second junctions 78 and 82. The tambour door may be positioned substantially within one of the first, second, and third track sections 74, 76, and 80. While positioned substantially within the first track section 74, the tambour door is in a storage location substantially hidden from view (e.g., concealed within the support structure 18). Moreover, while positioned substantially within the second track section 76, the tambour door is positioned above a first region of the interior/storage area (e.g., above a first portion of the storage compartment 46), thereby enabling the tambour door to function as a partial covering for the first region (e.g., to block access to the first region/first portion of the storage compartment 46). Furthermore, while positioned substantially within the third track section 80, the tambour door divides a second region of the interior/storage area (e.g., a second portion of the storage compartment 46) into a first sub-region and a second sub-region. In the illustrated embodiment, the first sub-region substantially corresponds to the first region. While the tambour door is positioned within the third track section 80, the tambour door may block objects disposed within the first and/or second sub-region from moving into the adjacent sub-region.

FIG. 6 is a cross-sectional view of another embodiment of the console 16 having a track with multiple track sections for moving a tambour door between multiple positions. The console 16 includes a track 84 coupled to and extending along the second wall 22 of the support structure 18. The track 84 includes a first track section 86 and a second track section 88 joined by a first junction 90. The first track section 86 extends in a substantially vertical plane, while the second track section 88 extends in a substantially horizontal plane. The first junction 90 is curved to facilitate joining the first and second track sections 86 and 88 together. The track 84 also includes a third track section 92 and a fourth track section 94 joined to the second track section 88 by a second junction 96. The second junction 96 is a T-junction or a Y-junction to facilitate joining the second, third, and fourth track sections 88, 92, and 94 together. The third track section 92 extends in a substantially horizontal plane adjacent to the second track section 88. As illustrated, the second, third, and fourth track sections 88, 92, and 94 together form a Y-shape or a T-shape.

The track 84 also includes a fifth track section 98 and a sixth track section 100 joined to the third track section 88 by a third junction 101. The third junction 101 is also a T-junction or a Y-junction and facilitates joining the third, fifth, and sixth track sections 92, 98, and 100 together. The fifth track section 98 extends in a substantially horizontal plane adjacent to the third track section 92. As illustrated, the third, fifth, and sixth track sections 92, 98, and 100 together form a Y-shape or a T-shape.

The track 84 includes a seventh track section 102 and an eighth track section 104 joined to the fourth and sixth track sections 94 and 100 by a fourth junction 106. The fourth junction 106 is an X-junction and facilitates joining the fourth, sixth, seventh, and eighth track sections 94, 100, 102, and 104 together. As illustrated, the fourth, sixth, seventh, and eighth track sections 94, 100, 102, and 104 together form an X-shape.

The track 84 also includes a ninth track section 108 and a tenth track section 110 joined to the seventh track section 102 by a fifth junction 112. The fifth junction 112 is a T-junction or a Y-junction to facilitate joining the seventh, ninth, and tenth track sections 102, 108, and 110 together. The ninth track section 108 extends in a substantially horizontal plane adjacent to the tenth track section 110, and both the ninth and tenth track sections 108 and 110 extend substantially parallel to the second, third, and fifth track sections 88, 92, and 98. As illustrated, the seventh, ninth, and tenth track sections 102, 108, and 110 together form a Y-shape or a T-shape.

The track 84 includes an eleventh track section 114 joined to the eighth and tenth track sections 104 and 110 by a sixth junction 116. The sixth junction 116 is also a T-junction or a Y-junction and facilitates joining the eighth, tenth, and eleventh track sections 104, 110, and 114 together. The eleventh track section 114 extends in a substantially horizontal plane adjacent to the tenth track section 110. As illustrated, the eighth, tenth, and eleventh track sections 104, 110, and 114 together form a Y-shape or a T-shape.

A tambour door is configured to slide within the first, second, third, fourth, fifth, sixth, seventh, eighth, ninth, tenth, and eleventh track sections 86, 88, 92, 94, 98, 100, 102, 104, 108, 110, and 114, and within the first, second, third, fourth, fifth, and sixth junctions 90, 96, 101, 106, 112, and 116. In certain embodiments, the tambour door may be positioned substantially within one of the first, second, fifth, ninth, and eleventh track sections 86, 88, 98, 108, and 114. While positioned substantially within the first track section 86, the tambour door may be substantially hidden from view. Moreover, while positioned substantially within the second track section 88, the tambour door may function as a partial covering for the storage compartment 46. Furthermore, while positioned substantially within one of the fifth, ninth, and eleventh track sections 98, 108, and 114, the tambour door may function as a substantially horizontal shelf within the storage compartment 46.

During operation, the tambour door may slide rearwardly from the second track section 88 to the third track section 92 or to the fourth track section 94. Furthermore, the tambour door may slide forwardly from the fifth track section 98 to the third track section 92 or to the sixth track section 100. Moreover, the tambour door may slide rearwardly from the eleventh track section 114 to the eighth track section 104 or to the tenth track section 110. The tambour door may also slide forwardly from the ninth track section 108 to the seventh track section 102 or to the tenth track section 110. Accordingly, the tambour door may be positioned at multiple different locations within the console 16 without removing the tambour door from the console 16. Therefore, the tambour door may be used to cover the storage compartment 46, and/or may operate as a shelf within the support structure 18.

FIG. 7 is a cross-sectional view of a further embodiment of the console 16 having a track with multiple track sections for moving a tambour door between multiple positions. The console 16 includes a track 118 coupled to and extending along the second wall 22 of the support structure 18. The track 118 includes a first track section 120 and a second track section 122 joined by a first junction 124. The first track section 120 extends in a substantially horizontal plane, while the second track section 122 extends in a substantially vertical plane. The first junction 124 is curved to facilitate joining the first and second track sections 120 and 122 together. The track 118 also includes a third track section 126 and a fourth track section 128 joined to the second track section 122 by a second junction 130. The second junction 130 is a T-junction or a Y-junction to facilitate joining the second, third, and fourth track sections 122, 126, and 128 together. The fourth track section 128 extends in a substantially horizontal plane that is substantially parallel to the first track section 120. As illustrated, the second, third, and fourth track sections 122, 126, and 128 together form a Y-shape or a T-shape.

A tambour door is configured to slide within the first, second, third, and fourth track sections 120, 122, 126, and 128, and within the first and second junctions 124 and 130. In certain embodiments, the tambour door may be positioned substantially within one of the first, second, third, and fourth track sections 120, 122, 126, and 128. While positioned substantially within the first and second track sections 120 and 122, the tambour door may be substantially hidden from view. Moreover, while positioned substantially within the third track section 126, the tambour door may function as a partial covering for the storage compartment 46. Furthermore, while positioned substantially within one of the third track section 128, the tambour door may function as a substantially horizontal shelf within the storage compartment 46.

During operation, the tambour door may slide rearwardly from the second track section 122 to the third track section 126 or to the fourth track section 128. Accordingly, the tambour door may be positioned at multiple different locations within the console 16 without removing the tambour door from the console 16. Therefore, the tambour door may be used to cover the storage compartment 46, and/or may operate as a shelf within the support structure 18.

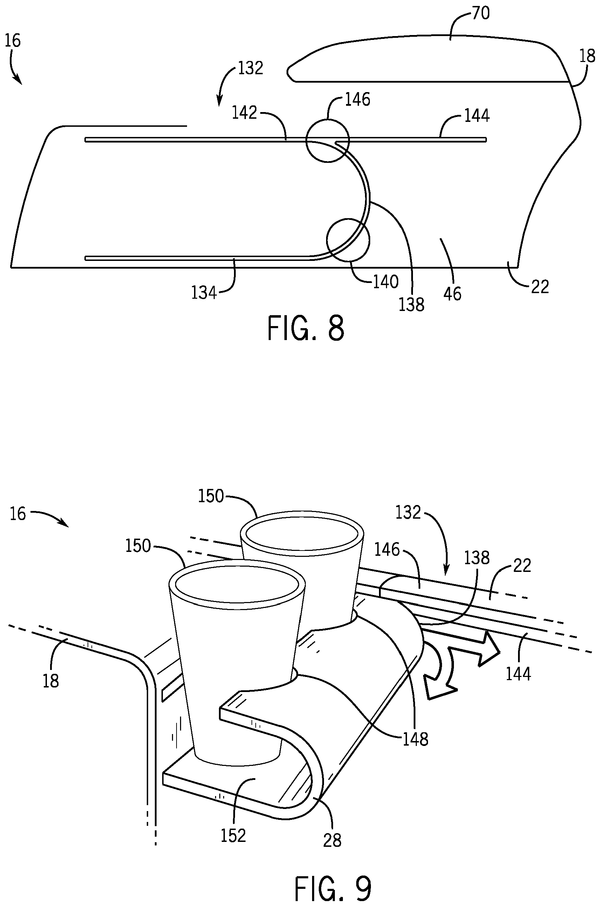

FIG. 8 is a cross-sectional view of yet another embodiment of the console 16 having a track with multiple track sections for moving a tambour door between multiple positions. The console 16 includes a track 132 coupled to and extending along the second wall 22 of the support structure 18. The track 132 includes a first track section 134 and a second track section 138 joined by a first junction 140. The first track section 134 extends in a substantially horizontal plane, while the second track section 138 is curved and extends vertically in relation to the first track section 134. The first junction 140 is curved to facilitate joining the first and second track sections 134 and 138 together. The track 132 also includes a third track section 142 and a fourth track section 144 joined to the second track section 138 by a second junction 146. The second junction 146 is a T-junction or a Y-junction to facilitate joining the second, third, and fourth track sections 138, 142, and 144 together. The third and fourth track sections 142 and 144 extend in a substantially horizontal plane that is substantially parallel to the first track section 134. As illustrated, the second, third, and fourth track sections 138, 142, and 144 together form a Y-shape or a T-shape. Furthermore, the first, second, and third track sections 134, 138, and 142 together form a c-shape. As may be appreciated, the track 132 may be used to position the tambour door within the fourth track section 144 to operate as a shelf and/or to position the tambour door within the first, second, and third track sections 134, 138, and 142 to operate as a cup holder, device holder, or other similar retaining feature.

FIG. 9 is a perspective view of the console 16 of FIG. 8. As illustrated, the second tambour door 28 may extend within the first, second, and third track sections 134, 138, and 142 to operate as a cup holder. The second tambour door 28 may include notches 148 to facilitate capturing cups 150 disposed within the cup holder formed by the second tambour door 28. Moreover, the second tambour door 28 may also include a resting surface 152 for the cups 150.

As described herein, the term "substantially," such as while used in the phrases substantially parallel, substantially perpendicular, substantially horizontal, substantially vertical, and/or substantially straight may mean within 5, 10, or 15 degrees of being respectively parallel, perpendicular, horizontal, vertical, and/or straight. Furthermore, unless described herein as being curved, any of the track sections may be substantially straight. However, in some embodiments, none of the track sections may be substantially straight. Moreover, as used herein, the term "junction" may refer to a portion of a track in which a change in direction of the track occurs, a portion of the track in which two or more track sections intersect or come together, and/or a fork in the track, for example.
As may be appreciated, the tambour doors described herein may be moved manually and/or automatically using various circuitry (e.g., control systems, motors, switches, gears, etc). While the tracks herein are described as being coupled to the first and second walls 20 and 22, it should be noted that the tracks may be coupled to any structure of the console 16 (or any other suitable device). For example, the tracks may be coupled to assembly 40, and so forth. Furthermore, although only one tambour door is described herein as being attached to each track, a track may include multiple tambour doors attached thereto.

## Claims

1. A vehicle console (16) comprising:
- a support structure (18);
- a track (84; 118; 132) extending along the support structure (18); and
- a tambour door (28) slidingly supported by the track (84; 118; 132), wherein the track (84; 118; 132) comprises a first track section (88; 122; 142), a second track section (92; 126; 144), and a third track section (94; 128; 138), the first, second, and third track sections (88, 92, 94; 122, 126, 128; 142, 144, 138) extend from a single junction (96; 130; 146), and the tambour door (28) is configured to slide within the first, second, and third track sections (88, 92, 94; 122, 126, 128; 142, 144, 138).

2. The vehicle console (16) of Claim 1 wherein the first and second track sections (88, 92; 142, 144) are aligned with one another.

3. The vehicle console (16) of Claim 1 or 2 wherein the tambour door (28) is configured to slide between the first and second track sections (88, 92; 122, 126; 142, 144), and between the first and third track sections (88, 94; 122, 128; 142, 138).

4. The vehicle console (16) of one of Claims 1 to 3 wherein the tambour door (28) is blocked from sliding between the second and third track sections (92, 94; 126, 128; 144, 138).

5. The vehicle console (16) of one of Claims 1 to 3 wherein the tambour door (28) is configured to slide between the first and second track sections (88, 92; 122, 126; 142, 144), between the first and third track sections (88, 94; 122, 128; 142, 138), and between the second and third track sections (92, 94; 126, 128; 144, 138).

6. The vehicle console (16) of one of Claims 1 to 5 wherein the single junction (96; 130; 146) comprises a T-junction or a Y-junction.

7. The vehicle console (16) of one of Claims 1 to 6 comprising a storage compartment (46) within the support structure (18), and wherein the tambour door (28) is configured to separate the storage compartment (46) into two sub-compartments while the tambour door (28) is in a vertical position; or wherein the tambour door (28) is configured to operate as a shelf of the storage compartment while the tambour door (28) is in a horizontal position.

8. The vehicle console (16) of one of Claims 1 to 7 wherein the tambour door (28) is configured to operate as a cup holder while the tambour door (28) extends within each of the first, the third, and a fourth track sections (142, 138, 134).

9. The vehicle console (16) of one of Claims 1 to 7 wherein the tambour door (28) is configured to be positioned in a first position in which the tambour door (28) is substantially within the first track section (142), and in a second position in which the tambour door (28) is substantially within the third track section (138), and
wherein the tambour door (28) is configured to be positioned in a third position in which the tambour door (28) is substantially within the second track section (144).

10. A vehicle console (16) comprising:
- a support structure (18) comprising a storage area (42, 44, 46);
- a track (48; 72) extending along the support structure (18), wherein the track (48; 72) comprises a first track section (52; 74), a second track section (56; 76), and a third track section (60; 80), and the first track section (52; 74), the second track section (56; 76), and the third track section (60; 80) are joined to one another by a pair of junctions (58, 64; 78, 82); and
- a tambour door (28) slidingly supported by the track (48; 72), wherein the first track section (52; 74) is configured to position the tambour door (28) in a storage location within the support structure (18), the second track section (56; 76) is configured to position the tambour door (28) above a first region of the storage area (42, 44, 46) to block access to the first region, the third track section (60; 80) is configured to position the tambour door (28) within a second region of the storage area (42, 44, 46) to divide the second region into a first sub-region and a second sub-region, and the tambour door (28) is configured to slide within the first, second, and third track sections (52, 56, 60; 74, 76, 80).

11. The vehicle console (16) of Claim 10 wherein the third track section (80) is substantially perpendicular to the second track section (76), and the first sub-region substantially corresponds to the first region.

12. The vehicle console (16) of Claim 10 wherein the second track section (56) and the third track section (60) are substantially straight and substantially aligned with one another.

13. The vehicle console (16) of one of Claims 10 to 12 wherein the pair of junctions (58, 64; 78, 82) comprises a first junction (58; 78) and a second junction (64; 82), the first track section (52; 74) is joined to the second track section (56; 76) by the first junction (58; 64), and the second track section (56; 76) is joined to the third track section (60; 80) by the second junction (64; 82).

14. The vehicle console (16) of one of Claims 10 to 13 wherein the support structure (18) is configured to substantially conceal the tambour door (28) while the tambour door (28) is in the storage location.

15. The vehicle console (16) of one of Claims 10 to 14 comprising a fourth track section (62) joined to the second and third track sections (56, 60) by the second junction (64), and the tambour door (28) is configured to slide within the first, second, third, and fourth track sections (52, 56, 60, 62).

## Patentansprüche

1. Fahrzeugkonsole (16), die Folgendes aufweist:
- eine Stützstruktur (18);
- eine Schiene (84; 118; 132), die sich entlang der Stützstruktur (18) erstreckt; und
- eine Rolltür (28), die verschiebbar mittels der Schiene (84; 118; 132) gestützt wird,
wobei die Schiene (84; 118; 132) einen ersten Schienenbereich (88; 122; 142), einen zweiten Schienenbereich (92; 126; 144) und einen dritten Schienenbereich (94; 128; 138) aufweist, wobei der erste, zweite und dritte Schienenbereich (88, 92, 94; 122, 126, 128; 142, 144, 138) sich von einer einzelne Verbindungsstelle (96; 130; 146) aus erstrecken, und wobei die Rolltür (28) dazu ausgebildet ist, sich innerhalb des ersten, zweiten und dritten Schienenbereichs (88, 92, 94; 122, 126, 128; 142, 144, 138) zu verschieben.

2. Fahrzeugkonsole (16) gemäß Anspruch 1,
wobei der erste und zweite Schienenbereich (88, 92; 142, 144) zueinander ausgerichtet.

3. Fahrzeugkonsole (16) gemäß Anspruch 1 oder 2,
wobei die Rolltür (28) dazu ausgebildet ist, sich zwischen dem ersten und zweiten Schienenbereich (88, 92; 122, 126; 142, 144), und zwischen dem ersten und dritten Schienenbereich (88, 94; 122, 128; 142, 138) zu verschieben.

4. Fahrzeugkonsole (16) gemäß einem der Ansprüche 1 bis 3,
wobei die Rolltür (28) davon gehemmt wird, sich zwischen dem zweiten und dritten Schienenbereich (92, 94; 126, 128; 144, 138) zu verschieben.

5. Fahrzeugkonsole (16) gemäß einem der Ansprüche 1 bis 3,
wobei die Rolltür (28) dazu ausgebildet ist, sich zwischen dem ersten und zweiten Schienenbereich (88, 92; 122, 126; 142, 144), sich zwischen dem ersten und dritten Schienenbereich (88, 94; 122, 128; 142, 138), und sich zwischen dem zweiten und dritten Schienenbereich (92, 94; 126, 128; 144, 138) zu verschieben.

6. Fahrzeugkonsole (16) gemäß einem der Ansprüche 1 bis 5,
wobei die einzelne Verbindungsstelle (96; 130; 146) eine T-Verbindungsstelle oder eine Y-Verbindungsstelle aufweist.

7. Fahrzeugkonsole (16) gemäß einem der Ansprüche 1 bis 6,
die einen Stauraum (46) innerhalb der Stützstruktur (18) aufweist, und wobei die Rolltür (28) dazu ausgebildet ist, den Stauraum (46) in zwei Unter-Stauräume zu unterteilen, wenn die Rolltür (28) in einer vertikalen Position ist;
oder wobei die Rolltür (28) dazu ausgebildet ist, als eine Ablage des Stauraums zu fungieren, wenn die Rolltür (28) in einer horizontalen Position ist.

8. Fahrzeugkonsole (16) gemäß einem der Ansprüche 1 bis 7,
wobei die Rolltür (28) dazu ausgebildet ist, als ein Becherhalter zu fungieren, während die Rolltür (28) sich innerhalb jedem von den ersten, dem dritten und einem vierten Schienenbereich (142, 138, 134) erstreckt.

9. Fahrzeugkonsole (16) gemäß einem der Ansprüche 1 bis 7,
wobei die Rolltür (28) dazu ausgebildet ist, in einer ersten Position und einer zweiten Position angeordnet zu werden, wobei die Rolltür (28) in der ersten Position im Wesentlichen innerhalb des ersten Schienenbereichs (142) liegt, und wobei die Rolltür (28) in der zweiten Position im Wesentlichen innerhalb des dritten Schienenbereichs (138) liegt, und wobei die Rolltür (28) dazu ausgebildet ist, in einer dritten Position angeordnet zu werden, in der die Rolltür (28) im Wesentlichen innerhalb des zweiten Schienenbereichs (144) liegt.

10. Fahrzeugkonsole (16), die Folgendes aufweist:
- eine Stützstruktur (18), die einen Staubereich (42, 44, 46) aufweist;
- eine Schiene (48; 72), die sich entlang der Stützstruktur (18) erstreckt, wobei die Schiene (48; 72) einen ersten Schienenbereich (42; 74), einen zweiten Schienenbereich (56; 76) und einen dritten Schienenbereich (60; 80) aufweist, und wobei der erste Schienenbereich (52; 74), der zweite Schienenbereich (56; 76) und der dritte Schienenbereich (60; 80) miteinander mittels eines Paares von Verbindungsstellen (58, 64; 78, 82) verbunden ist;
- eine Rolltür (28), die verschiebbar mittels der Schiene (48; 72) gestützt ist, wobei der erste Schienenbereich (52; 74) dazu ausgebildet ist, die Rolltür (28) in einem Stauort innerhalb der Stützstruktur (18) anzuordnen, wobei der zweite Schienenbereich (56; 76) dazu ausgebildet, die Rolltür (28) über einen ersten Bereich des Staubereichs (42, 44, 46) anzuordnen, um den Zugang zu dem ersten Bereich zu blockieren, wobei der dritte Schienenbereich (60; 80) dazu ausgebildet ist, die Rolltür (28) innerhalb eines zweiten Bereichs des Staubereichs (42, 44, 46) anzuordnen, um den zweiten Bereich in einen ersten Unterbereich und einen zweiten Unterbereich zu unterteilen, und wobei die Rolltür (28) dazu ausgebildet ist, sich innerhalb des ersten, zweiten und dritten Schienenbereichs (52, 56, 60; 74, 76, 80) zu verschieben.

11. Fahrzeugkonsole (16) gemäß Anspruch 10,
wobei der dritte Schienenbereich (80) im Wesentlichen senkrecht zu dem zweiten Schienenbereich (76) ausgebildet ist, und wobei der erste Unterbereich im Wesentlichen dem ersten Bereich entspricht.

12. Fahrzeugkonsole (16) gemäß Anspruch 10,
wobei der zweite Schienenbereich (56) und der dritte Schienenbereich (60) im Wesentlichen gerade sind und im Wesentlich zueinander ausgerichtet sind.

13. Fahrzeugkonsole (16) gemäß einem der Ansprüche 10 bis 12,
wobei das Paar von Verbindungsstellen (58, 64; 78, 82) eine erste Verbindungsstelle (58; 78) und eine zweite Verbindungsstelle (64; 82) aufweist, wobei der erste Schienenbereich (52; 74) durch die erste Verbindungsstelle (58; 64) mit dem zweiten Schienenbereich (56; 76) verbunden ist, und wobei der zweite Schienenbereich (56; 76) durch die zweite Verbindungsstelle (64; 82) mit dem dritten Schienenbereich (60; 80) verbunden ist.

14. Fahrzeugkonsole (16) gemäß einem der Ansprüche 10 bis 13,
wobei die Stützstruktur (18) dazu ausgebildet ist, im Wesentlichen die Rolltür (28) zu verbergen, wenn die Rolltür (28) sich in dem Stauort befindet.

15. Fahrzeugkonsole (16) gemäß einem der Ansprüche 10 bis 14,
die einen vierten Schienenbereich (62) aufweist, der mit dem zweiten und dritten Schienenbereich (56, 60) durch die zweite Verbindungsstelle (64) verbunden ist, und wobei die Rolltür (28) dazu ausgebildet ist, sich innerhalb des ersten, zweiten, dritten und vierten Schienenbereichs (52, 56, 60, 62) zu verschieben.

## Revendications

1. Console de véhicule (16) comprenant:
- une structure de support (18);
- une voie (84; 118; 132) s'étendant le long de la structure de support (18); et
- une porte à tambour (28) supportée en coulissement par la voie (84; 118; 132),
dans laquelle la voie (84; 118; 132) comprend un premier tronçon de voie (88; 122; 142), un second tronçon de voie (92; 126; 144), et un troisième tronçon de voie (94; 128; 138), le premier, le second et le troisième tronçon de voie (88, 92, 94; 122, 126, 128; 142, 144, 138) s'étendant depuis une unique jonction (96; 130; 146), et la porte à tambour (28) est configurée pour coulisser à l'intérieur du premier, du second, et du troisième tronçon de voie (88, 92, 94; 122, 126, 128; 142, 144, 138).

2. Console de véhicule (16) selon la revendication 1,
dans laquelle le premier et le second tronçon de voie (88, 92; 142, 144) sont alignés l'un avec l'autre.

3. Console de véhicule (16) selon la revendication 1 ou 2,
dans laquelle la porte à tambour (28) est configurée pour coulisser entre le premier et le second tronçon de voie (88, 92; 122, 126; 142, 144), et entre le premier et le troisième tronçon de voie (88, 94; 122, 128; 142, 138).

4. Console de véhicule (16) selon l'une des revendications 1 à 3,
dans laquelle la porte à tambour (28) est bloquée à l'encontre d'un coulissement entre le second et le troisième tronçon de voie (92, 94; 126, 128; 144, 138).

5. Console de véhicule (16) selon l'une des revendications 1 à 3,
dans laquelle la porte à tambour (28) est configurée pour coulisser entre le premier et le second tronçon de voie (88, 92; 122, 126; 142, 144), entre le premier et le troisième tronçon de voie (88, 94; 122, 128; 142, 138), et entre le second et le troisième tronçon de voie (92, 94; 126, 128; 144, 138).

6. Console de véhicule (16) selon l'une des revendications 1 à 5,
dans laquelle la jonction unique (96; 130; 146) comprend une jonction en T ou une jonction en Y.

7. Console de véhicule (16) selon l'une des revendications 1 à 6,
comprenant un compartiment de stockage (46) à l'intérieur de la structure de support (18), et dans laquelle la porte à tambour (28) est configurée pour séparer le compartiment de stockage (46) en deux sous-compartiments alors que la porte de tambour (28) est dans une position verticale; ou
dans laquelle la porte à tambour (28) est configurée pour faire office d'étagère du compartiment de stockage alors que la porte de tambour (28) est dans une position horizontale.

8. Console de véhicule (16) selon l'une des revendications 1 à 7,
dans laquelle la porte à tambour (28) est configurée pour faire office de porte-gobelet alors que la porte à tambour (28) s'étend à l'intérieur de chacun du premier, du troisième et d'un quatrième tronçon de voie (142, 138, 134).

9. Console de véhicule (16) selon l'une des revendications 1 à 7,
dans laquelle la porte à tambour (28) est configurée pour être positionnée dans une première position dans laquelle la porte à tambour (28) est sensiblement à l'intérieur du premier tronçon de voie (142), et dans une seconde position dans laquelle la porte à tambour (28) est sensiblement à l'intérieur du troisième tronçon de voie (138), et
dans laquelle la porte à tambour (28) est configurée pour être positionnée dans une troisième position dans laquelle la porte à tambour (28) est sensiblement à l'intérieur du second tronçon de voie (144).

10. Console de véhicule (16) comprenant:
- une structure de support (18) comprenant une zone de stockage (42, 44, 46);
- une voie (48; 72) s'étendant le long de la structure de support (18), dans laquelle la voie (48; 72) comprend un premier tronçon de voie (52; 74), un second tronçon de voie (56; 76), et un troisième tronçon de voie (60; 80), et le premier tronçon de voie (52; 74), le second tronçon de voie (56; 76), et le troisième tronçon de voie (60; 80) sont réunis les uns aux autres par une paire de jonctions (58, 64; 78, 82); et
- une porte à tambour (28) supportée en coulissement par la voie (48; 72), dans laquelle le premier tronçon de voie (52; 74) est configuré pour positionner la porte à tambour (28) dans un emplacement de stockage à l'intérieur de la structure de support (18), le second tronçon de voie (56; 76) est configuré pour positionner la porte à tambour (28) au-dessus d'une première région de la zone de stockage (42, 44, 46) pour bloquer l'accès à la première région, le troisième tronçon de voie (60; 80) est configuré pour positionner la porte à tambour (28) à l'intérieur d'une seconde région de la zone de stockage (42, 44, 46) pour diviser la seconde région en une première sous-région et une seconde sous-région, et la porte à tambour (28) est configurée pour coulisser à l'intérieur du premier, du second, et du troisième tronçon de voie (52, 56, 60; 74, 76, 80).

11. Console de véhicule (16) selon la revendication 10,
dans laquelle le troisième tronçon de voie (80) est sensiblement perpendiculaire au second tronçon de voie (76) et la première sous-région correspond sensiblement à la première région.

12. Console de véhicule (16) selon la revendication 10,
dans laquelle le second tronçon de voie (56) et le troisième tronçon de voie (60) sont sensiblement rectilignes et sensiblement alignés l'un avec l'autre.

13. Console de véhicule (16) selon l'une des revendications 10 à 12,
dans laquelle la paire de jonctions (58, 64; 78, 82) comprend une première jonction (58; 78) et une seconde jonction (64; 82), le premier tronçon de voie (52; 74) est réuni au troisième tronçon de voie (56; 76) par la première jonction (58; 64), et le second tronçon de voie (56; 76) est réuni au troisième tronçon de voie (60; 80) par la seconde jonction (64; 82).

14. Console de véhicule (16) selon l'une des revendications 10 à 13,
dans laquelle la structure de support (18) est configurée pour dissimuler sensiblement la porte à tambour (28) quand la porte à tambour (28) est à l'emplacement de stockage.

15. Console de véhicule (16) selon l'une des revendications 10 à 14,
comprenant un quatrième tronçon de voie (62) réuni au second et au troisième tronçon de voie (56, 66) par la seconde jonction (64), et la porte à tambour (28) est configurée pour glisser à l'intérieur du premier, du second, du troisième et du quatrième tronçon de voie (52, 56, 60, 62).
